**Europäisches Patentamt**

**European Patent Office**

**Office européen des brevets**

(11) Veröffentlichungsnummer: **0 497 119 A1**

# EUROPÄISCHE PATENTANMELDUNG

(21) Anmeldenummer: **92100376.0**

(51) Int. Cl.⁵: **C23C 26/02**, C23C 24/10

(22) Anmeldetag: **11.01.92**

(30) Priorität: **29.01.91 DE 4102495**

(43) Veröffentlichungstag der Anmeldung:
**05.08.92 Patentblatt 92/32**

(84) Benannte Vertragsstaaten:
**DE**

(71) Anmelder: **Thyssen Edelstahlwerke AG**
**August-Thyssen-Strasse 1**
**W-4000 Düsseldorf(DE)**

(72) Erfinder: **Behr, Friedrich, Prof. Dr.**
**Espenweg 19**
**W-4150 Krefeld(DE)**
Erfinder: **Arndt, Christian, Dipl.-Ing.**
**Hauptstrasse 380**
**W-4150 Krefeld(DE)**

(54) **Verfahren zum Beschichten von Substraten.**

(57) Die Erfindung betrifft ein Verfahren zum Herstellen von Schichten auf Substratoberflächen und zur Herstellung von Formteilen aus Vielfachschichten nach Art des Auftragsschweißens mit Hilfe der Energiezufuhr einer Energiequelle in oder auf das Substrat oder in den Schichtwerkstoff, der zum Teil oder vollständig aus Zusatzmaterial besteht, unter Anschmelzung der Substratoberfläche und/oder der Oberfläche der vorausgegangenen Schicht mit oder ohne Gegenwart und Reaktionsteilnahme eines reaktiven Gases, wobei mehr als 50 Vol.-% des späteren Schichtmaterials den schmelzflüssigen Zustand durchlaufen, erstarren und die Schicht mit $10^2$ bis $10^8$ k/s oberhalb von ca. 500 °C abkühlt. Kennzeichen der Erfindung ist, daß festes Zusatzmaterial während und/oder nach der Einkopplung der Energie der Energiequelle mit sich selbst und/oder mit dem Substratmaterial unter Wärmefreisetzung von mehr als 2 kJ/cm³ der Schicht unter Bildung einer Oxid-Keramik-enthaltenden und/oder einer hartstoffhaltigen und/oder eine oder mehrere intermetallische Verbindungen enthaltenden Schicht reagiert.

EP 0 497 119 A1

Das Verfahren betrifft die Herstellung von Schichten auf Substraten und die Herstellung von Formkörpern durch Aufbringung von Vielfachschichten mit Hilfe einer Energiequelle nach Art des Auftragsschweißens. Die Schichtmaterialien bestehen aus schwer oder nicht kalt- oder warmumformbaren Werkstoffen oder aus Werkstoffen, die sich aus mehreren Phasen zusammensetzen und zur Entmischung neigen, wenn sie auf konventionellem Wege über die flüssige Phase hergestellt werden.

Es ist seit vielen Jahrzehnten bekannt, das "Thermitverfahren" zum Schweißen großer Bauteile einzusetzen. Hierbei wird flüssiger Stahl durch chemische Energie aus z.B. $Fe_2O_3$ mitAluminiumpulver nach einer Zündung durch eine Energiequelle erzeugt.

Es ist weiterhin bekannt, daß Formkörper aus z.B. einer härtbaren stahlgebundenen Hartstofflegierung (40 % bis ca. 70 % Vol. Titancarbid in einer Matrix aus einem Kaltarbeitsstahl, Schnellstahl, Nickelmartensit-ausbildenden Stahl, rostfreien Edelstahl usw.) aus den Pulvern des Hartstoffs und den Metallpulvern durch Vakuumsintern hergestellt werden. Die endgültige Formgebung erfolgt spanabhebend oder durch Schleifen. Die Fertigung ist sehr kostenintensiv. Ein schmelzmetallurgischer Weg würde zur Entmischung führen. Ganz ähnlich werden Hartmetallteile hergestellt, die üblicherweise aus Wolframcarbid mit Kobaltmatrix bestehen.

Cermets bestehen ebenfalls aus einem sehr hohen Hartstoffanteil, z.B. Karbide und Nitride, und Nickel als wesentliche Komponente der Bindephase (Matrix). Eigenschaften, Zusammensetzung und Anwendungen werden von Ettmayer, P., Kolaska, H. in "Metall, 43. Jahrgang, Heft 8, S. 742 bis 749" beschrieben. Cermets werden aus feinstkörnigen Hartstoffpulvern (ca. 1 $\mu$m ∅) und Metallpulvern durch Formgebung, Vakuumsintern und heißisostatisches Nachverdichten hergestellt. Der Herstellungsgang ist sehr kostenintensiv.

Die Erschmelzung eines Teiles des Titancarbides und Titannitrides zur Erzielung von Porenfreiheit sind nach Stand der Technik weder kostengünstig darstellbar, noch erwünscht, weil sie zur Vergröberung der Hartstoffphasen durch Kornwachstum und zu mangelhafter Konturtreue führen würden.

Es wurde ferner versucht, Stäbe und Bleche aus der intermetallischen Verbindung AlNi (1/1 in Atomanteilen) durch Erschmelzung und Warmumformen herzustellen. Dieses Material ist besonders hochwarmfest und zunderbeständig. Die Herstellung scheiterte an der mangelnden Warmumformbarkeit. Dieses Material oder Material aus dem System Al/Ni wird aber häufig als sogenannter Haftgrund für Keramikschichten durch thermisches Spritzen des Pulvers auf ein Substrat verwendet.

Keramikschichten auf Titansubstraten dienen überwiegend zur Herstellung von Implantaten. Als abrasionsfeste Schicht für Umformwerkzeuge u.ä. Anwendungen kommt diese Technik z.Zt. nicht infrage, weil die Haftfestigkeit dieser Zwischenschicht als Haftgrund kaum über 40 $N/mm^2$ gesteigert werden kann.

Es ist nun weiterhin bekannt, daß Plasmaspritzschichten auf Werkzeugstählen aus härtbaren stahlgebundenen Hartstofflegierungen mit Hilfe eines Laserstrahles nachgesintert werden können. Dies wird beispielsweise in Behr, F.; Arndt, Ch.; Haberling, E.; "Legieren und Hartstoffüllen von Randschichten auf Werkzeugstahl mit Laserenergie" aus "Neue Werkstoffe und Verfahren für Werkzeuge" Proc. 2. Int. Konf., 6.-8.9. 1989 der Ruhr-Universität Bochum, S. 327-339, Verlag Schürmann & Klages KG, Bochum 1989 beschrieben. Die Nachteile dieser Technik bestehen in

1. der Verwendung zweier teurer Maschinen: Plasmaspritzanlage und Laser;

2. in der ungleichmäßigen Schichtdicke der Plasmaschichten auf kompliziert geformten dreidimensionalen Oberflächen und vor allem

3. in der geringen Flächenleistung des Lasers.

Bei einer Sinter-Schichtdicke von 0,3 mm und der Dicke der Umschmelzzone von ca. 0,1 mm wurde mit einem Laser mit 4,0 kW am Werkstück nur eine Flächenleistung von ca. 0,15 $m^2$/h erreicht.

Aus der DE 38 08 285 A 1 ist ein Laser-Beschichtungsverfahren bekannt, bei dem Zusatzwerkstoffe mit einer tieferen Schmelztemperatur als die des Substrates eingesetzt werden, das Reaktionsgas mit dem Zusatzwerkstoff und ggf. mit dem Substratmaterial reagiert und Produkte in der Schicht erzeugt werden, die eine höhere Schmelztemperatur aufweisen, als die des Substratwerkstoffes. Als Beispiele der Reaktionsgase sind Stickstoff und gasförmige Kohlenwasserstoffe bekannt, die dabei z.B. Titannitrid oder Titankarbid in exothermer Reaktion als grobkörnige Dendriten bilden. Als Zusatzwerkstoffe werden bevorzugt tiefschmelzende intermetallische Verbindungen der Systeme Ti/Ni, Ti/Mn, Ti/Cr, Ti/Cu und Ti/Fe in Pulverform bzw. als thermische Spritzschicht verwendet, s. Bergmann, H.W.; Breme, J.: Lee, S.Z. "Laser hardfacing by melt bath reactions" in ECLAT 88, 2nd. Europ. Conf. on Laser Treatment of Materials, DVS Berichtsband 113, S. 70-73, DVS-Verlag GmbH, Düsseldorf (1988). Die Umsetzung von Al, Zr oder Cr enthaltenden Systemen mit Edelgas-verdünnten Gasen, wie Sauerstoff, Stickstoff oder Methan, wird als Möglichkeit beschrieben. Aus dieser Veröffentlichung läßt sich nun beim Gasnitrieren mit reinem Stickstoff der Legierung TiAl 6 V 4 durch Umrechnung der gegebenen Daten auf 4 kW am Werkstück (cw-Betrieb) und 0,4 mm Aufschmelztiefe eine Flächenleistung von ca. 0,38 $m^2$/h ermitteln.

Die erzielte Härte liegt bei bis zu 1000 HV 0,1. Die Nachteile dieser Technik bestehen darin, daß

1. die Diffusion und Reaktion der Reaktionsgase in die Oberfläche des Schmelzbades eine die Flächenleistung begrenzende Größe darstellt und

2. der Hartstoffanteil bzw. der Anteil der hochschmelzenden Schichtbestandteile nicht beliebig (über ca. 30-40 Vol.-%) gesteigert werden kann, weil zur Umsetzung mit dem Reaktionsgas die Konvektion im Schmelzbad Voraussetzung ist und damit eine geeignete Löslichkeit eines wesentichen Teiles der hochschmelzenden Anteile in dem flüssigen Matrixmaterial und,

3. daß keine gehärtete oder härtbare Schichtmatrix herstellbar ist.

Aufgabe der Erfindung ist es, Schichten mit einem Anteil von über 40 Vol.-% hochschmelzender Phasen einer Korngröße von $\leq$ 10 $\varnothing$ $\mu$m ohne Entmischung zu erzeugen.

Diese Aufgabe wird erfindungsgemäß durch die Maßnahmen des Anspruchs 1 gelöst. Es hat sich überraschend gezeigt, daß sich durch Vorgabe von festen Reaktanden im Zusatzwerkstoff oder eines oder mehrerer fester Reaktanden im Zusammenwirken mit dem Substrat als Grundwerkstoff für die Beschichtung eine so hohe potentielle Energie vorgeben läßt, daß durch externe Energie nur noch gezündet werden muß. Das überraschende an dieser Technik ist, daß auch sehr grobkörnige Pulver von $\leq$ 63 $\mu$m $\varnothing$, die hier als reagierendes Zusatzmaterial verwendbar sind, vollständig zur Reaktion gebracht werden können. Die Benutzbarkeit von grobkörnigem Material mit breitem Korngrößenspektrum stellt eine erhebliche Kostenminderung dar. Die untere Grenze der nötigen Menge potentieller Energie im Zusatzwerkstoff wurde hier im Experiment näherungsweise ermittelt.

Beispiele

Im folgenden werden alle weiteren Beispiele und Angaben auf einen Laser mit 4,3 kW am Werkstück, cw-Betrieb, Linienfokus mit 6 x 0.3 mm und einer Intensität von 2,55 $\cdot$ $10^5$ W/cm$^2$ bezogen. Auch wenn viele andere Verfahren der Zuführung von Zusatzmaterial wie Fülldraht mit und ohne elektrischer Vorwärmung, Pulverförderung in den Brennfleck u.a.m. infrage kommen, wird hier bei allen Beispielen von einer Pulvervorbeschichtung von 1 mm Dicke auf Substraten aus Stahl ausgegangen. Der Vorschub wurde so optimiert, daß jeweils eine Umschmelztiefe (Schichtdicke) von 0,50 bis 0,6 mm erzeugt wurde.

Beispiel 1

Die Umschmelzung von Titanpulver zusammen mit Nickelpulver führt zur Bildung von TiNi (1:1 im Atomverhältnis), hier mit einem Aufmischungsgrad von ca. 20 % Vol. mit dem Stahlsubstratmaterial (St 52).

Daraus errechnet sich eine im Zusatzmaterial vorhandene potentielle Energiedichte von ca. 3,5 kJ pro cm$^3$ der fertigen Schicht. Es wurde eine Flächenleistung von ca. 0,45 m$^2$/h gefunden.

Beispiel 2

Die Umschmelzung der intermetallischen Verbindung TiNi als Pulver (1:1 im Atomverhältnis) mit zusätzlich 2 Atomen Ni führt zur Bildung von TiNi$_3$. Die bei 20 % Aufmischungsgrad berechnete potentielle Energiedichte beträgt ca. 2 kJ/cm$^3$ der fertigen Schicht. Die Flächenleistung wurde zu ca. 0,30 m$^2$/h ermittelt und ist damit kaum höher als die des üblichen Umschmelzens oder Umschmelzlegierens des Stahlsubstrates.

Aus der Einschränkung der Erfindung auf potentielle Energiedichten im Zusatzwerkstoff oder im Zusammenwirken des Zusatzwerkstoffes mit dem Substrat von mehr als 2 kJ/cm$^3$ der Schicht geht hervor, daß zufällige Umschmelzungen, beispielsweise von zur Erhöhung der Absorption dünn graphitisierten Stahloberflächen beim Härten, nicht unter diese Erfindung fallen, weil die aus dem geringen Kohlenstoff-Eintrag errechenbare potentielle Energiedichte viel geringer ist.

Die Absorption der Laserstrahlung eines Kohlendioxid-Lasers in den Schmelzfleck beträgt nur ca. 10 bis 15 % der abgegebenen Laser-Leistung. Der Energieeintrag durch den Laser liegt dann bei etwa 8 bis 13 kJ/cm$^3$ der Schicht.

Wenn vorzugsweise Zusatzwerkstoffe verwendetwerden, deren potentielle Energiedichte mit Hilfe der exothermen Reaktion eine ähnliche Größe erreicht oder überschreitet, kann die Flächenleistung mindestens verdoppelt werden.

Beispiel 3

Die Umschmelzung eines Pulvergemisches mit stöchiometrischer Zusammensetzung zur Bildung von TiC von Titan mit Petrolkoks auf einem Substrat aus Stahl (St 52) führt zu einer Flächenleistung von ca. 0,55 m$^2$/h. Die bei 20 % Vol. Aufmischungsgrad berechnete potentielle Energiedichte beträgt ca. 12 kJ/cm$^3$ der fertigen Schicht.

Beim Laser-Gasnitrieren von Titan nach Stand der Technik ergibt sich eine potentielle Energiedichte von ca. 24 kJ/cm$^3$ der fertigen Schicht. Aus dem Vergleich mit Beispiel 3 geht hervor, daß die Kinetik des Laser-Gasnitrierens stark gehemmt ist. Erfindungsgemäß ist es möglich, beide Methoden zugleich anzuwenden, um die Flächenleistung weiter zu steigern.

## Beispiel 4

Die Umsetzung eines Pulvergemisches mit stöchiometrischer Zusammensetzung aus Ni und Al mit einem der Aufmischung entsprechenden Überschuß an Al auf einem Nickel-Substrat führt zur Bildung von NiAl (ca. 1:1 im Atomverhältnis) als Schicht. Die errechnete potentielle Energiedichte beträgt ca. 7,6 kJ/cm$^3$. Die Laser-Flächenleistung wurde zu etwa 0,60 m$^2$/h ermittelt.

Der Vergleich mit Beispiel 3 lehrt, daß die Begrenzung der Flächenleistung bei der Erzeugung von hartstoffhaltigen Schichten in den hohen Beträgen der Schmelzwärmen und Schmelztemperaturen der Hartstoffe zu suchen ist. Sie sind höher als die der Metalle. Schliffbilder der hartstoffhaltigen Schichten zeigen, daß die Hartstoffe aller hier genannten Experimente schmelzflüssig bzw. in einer flüssigen Phase gelöst gewesen waren.

Es ist aber auch möglich, das erfindungsgemäße Verfahren auf das "Laser-Dispergieren" anzuwenden. Dazu kommt beispielsweise die Vorgabe eines Pulvergemisches aus Ti mit Ni und Kohlenstoff und Titannitridpulver infrage, so daß eine Schicht aus TiC und TiN bzw. Titancarbonitrid in einer Matrix aus TiNi mit geringen Anteilen aus TiNi$_3$ ($\gamma$) erzeugt werden kann. In ersten Handversuchen wurden an Laser-umgeschmolzenem TiNi mit eingelagertem (ca. 5 Gewichts-%) TiNi$_3$ Härten bis zu 1000 HV gefunden, so daß dieses Material als Matrixmaterial infrage kommt.

## Beispiel 5

Die Umschmelzung der intermetallischen Verbindung TiNi als Pulver (1:1 im Atomverhältnis) mit einer zur TiC stöchiometrischen Petrolkoksmenge führt zur Schicht aus TiC in einer Nickelmatrix. Die potentielle Energiedichte wurde zu 7,3 kJ/cm$^3$ der fertigen Schicht bei 20 % Vol. Aufmischungsgrad errechnet. Die Flächenleistung beträgt 0,44 m$^2$/h, TiC wurde feinkörnig mit $\leq$ 4 um ø ausgeschieden.

Es ist aber auch möglich, ein Pulvergemisch als Zusatzwerkstoff, z.B. aus der Verbindung Ni$_2$Al$_3$ (um den hohen Dampfdruck des Aluminiums zu senken) zusammen mit einem Pulver aus NiO umzuschmelzen. Als Produkt ist ein Material aus NiAl mit Al$_2$O$_3$ (Korund) zu erwarten. Durch die hohe Konvektion, die bekanntlich im Schmelzfleck der Laser-Umschmelzung herrscht und durch die ebenfalls bekannte schnelle Abschreckung in der Größenordnung von ca. 10$^3$ bis 10$^4$ K/s sind Entmischungen vermeidbar. Selbst bei hoher Vorwärmung der Substrate oder der von schon mehrfach beschichteten Substraten, z.B. mehr als 1000°C, um Thermoschock-Risse zu vermeiden, sollte eine Abschreckung von ca. 102 K/s noch ausreichen, um ein feinkörniges Gefüge zu erhalten.

Es ist natürlich auch möglich, mit dem erfindungsgemäßen Verfahren amorphe Schichten zu erzeugen. Dies bedingt bekanntlich extrem hohe Abkühlgeschwindigkeiten von etwa 10$^6$ bis zu 10$^8$ K/s, die durch die Verwendung gekühlter oder kalter Substrate und Herstellung besonders dünner Schichten möglich sind. Amorphe Eisen/Bor- oder Eisen/Bor/Siliziumlegierungen finden bekanntlich in der Elektrotechnik (Transformatoren etc.) Verwendung.

Weiterhin ist es möglich, sogenannte selbstfließende Legierungen aus z.B. Ni/Cr/B/Si- oder Co/Cr/B/Si, wie sie z.Zt. als thermische Spritzschichten verwendet werden, als Schichten herzustellen. Dabei wird hier erfindungsgemäß z.B. ein Pulverzusatzmaterial eingesetzt, welches aus einer Vorlegierung Ni-Cr bzw. Co-Cr besteht, und Bor und Silizium in elementarer Form enthält, so daß die potentielle Energie der Silizid- bzw. Boridbildung zur Erhöhung der Flächenleistung nutzbar wird.

Diese Legierungen, wie auch ähnliche Zusatzmaterialien, die z.Zt. als Vakuum-Hartlote verwendet werden, ergeben bei der Laserbehandlung besonders glatte Schichten mit sehr geringem Aufmischungsgrad.

Um Feinkörnigkeit des Gefüges und möglichst geringe Aufmischungsgrade zu erhalten, ist es sinnvoll, jeweils nur dünne Schichten in der Größenordnung 0,2 bis ca. 1 mm herzustellen und eine Energiequelle zu verwenden, die hohe Leistungsdichten liefert. Geringe Leistungsdichten würden das Substrat thermisch stark belasten. Bevorzugt wird deshalb zur Durchführung des erfindungsgemäßen Verfahrens ein CO$_2$-Laser mit Schutzgasoder Reaktionsgaseinrichtung verwendet. Zur Herstellung von Schichten auf ebenen oder rotationssymmetrischen, großflächigen Substraten bietet sich dagegen die Verwendung einer Hochleistungsbogenlampe an, die zwar keine so hohe Leistungsdichte wie ein Laser aufweist, dafür aber hohe Gesamtleistungen einstrahlt.

Es bietet sich nun weiterhin an, mit einer Mehrfachbeschichtungden Aufmischungsgrad mit dem Substratmaterial zu vermindern. Dadurch wird im Fall der hartstoffgefüllten Schichten gleichzeitig erreicht, daß der Volumenanteil der Matrix pro Schicht abnimmt und damit z.B. die Härte zunimmt. Dies ist auch hilfreich zur Vermeidung von Rissen.

Das Zusatzmaterial kann in Form einer Schweißelektrode, einer Fülldrahtelektrode mit oder ohne elektrischer Beheizung, als Pulver-Vorbeschichtung, mit Hilfe einer Paste oder eines Schlikkers mit anschließender Trocknung oder Entgasung in den Schmelzfleck gebracht werden. Es sind noch weitere Methoden hierzu bekannt. Eine diskontinuierliche Zuführung kommt mit Vorteil bei der Herstellung von Formkörpern infrage wobei man die Temperaturen der vorher aufgebrachten Schicht mißt, auf z.B. 1000°C abkühlen läßt, und anschließend wieder z.B. Pulver und Laserleistung zugibt. Hierbei kann es auch sinnvoll sein, den Laser zu pulsen. Dies ist insbesondere dann sinnvoll, wenn im Zusatzwerkstoff Komponenten mit einer tiefen Verdampfungstemperatur vorhanden sind, deren Gas in der Lage ist, die Laserleistung durch Plasmabildung zu absorbieren.

Aus Tabellenwerken, wie Barin, I.; Knacke, O. Thermochemical Tables, Springer Verlag Berlin 1978 und 1973 und Kaufmann. L.; Nesor, H. Calculation of Binary Systems, Calphad Vol. 2 bis Vol. 4 Pergamon Press, GB, (1978) und ähnlichen Datensammlungen, sind eine Fülle von Bildungsenthalpien intermetallischer Verbindungen und Hartstoffe bekannt. Die Angabe in Anspruch 7, Phasen mit Bildungswärmen größer als 40 kJ pro ganzzahlig geschriebenen mol exotherm zu bilden, erleichtert die Auswertung und ist etwa gleichwertig mit der Angabe "> 2 kJ/cm$^3$ des Schichtwerkstoffes" im Anspruch 1. Demnach kommt eine große Anzahl intermetallischer Verbindungen und Hartstoffe als erfindungsgemäße Schichtprodukte infrage. Außerdem geht aus diesen Tabellen hervor, daß Schichtprodukte, die eine hohe exotherme Bildungsenthalpie aufweisen, aus festen Zusatzstoffen gebildet werden können, die eine kleine exotherme Bildungswärme aufweisen.

In Analogie zum Erläuterungsbeispiel 3 gelingt es problemlos eine poren- und rißfreie Schicht aus härtbaren stahlgebundenen Hartstofflegierungen mit Hilfe von Titanpulver und Petrolkokspulver auf Stahlsubstraten herzustellen, wobei mit Hilfe eines der Aufmischung entsprechenden Kohlenstoffüberschusses auch eine martensitische Härtung in der Matrix erzielt werden kann. Das Problem der Vermeidung der Rißbildung bei der Beschichtung von gehärteten bzw. gehärteten und angelassenen Substraten wird eingehend bei Behr, F.; Arndt, Ch.; Haberling, E.;, loc. cit. behandelt. Zur Beschichtung geeignet sind demnach Werkzeugstähle mit einer möglichst hohen Martensitstarttemperatur, so daß die mit der Martensitbildung verbundene Volumendehnung des Substrates von einer noch austenitischen Schichtmatrix bei der Abkühlung nach Laserbehandlung vertragen wird und das martensitische Gefüge der Schichtmatrix erst anschließend und beim Anlassen gebildet wird. Auf diese Weise sollten sich in der Schicht Druckeigenspannungen erzeugen lassen.

Eine besonders vorteilhafte Anwendung des erfindungsgemäßen Verfahrens ergibt sich aus der Herstellung von Schichten und Stäben aus Molybdändisilizid z.B. als Heizleiterwerkstoff.

Die Reaktion

$$Mo + 2\,Si \longrightarrow MoSi_2$$

setzt lt. Kaufmann, L.; Nesor, H.; loc. cit. 216 kJ pro Formelumsatz in mol frei, so daß sich Stäbe z.B. in einem Rohr als Form durch Zugabe des Si- und Mo-Pulvergemisches und Laserenergie herstellen lassen sollten.

Beispiel 6

Es wurde ein Pulvergemisch hergestellt, das aus den Anteilen in (mol): W 0,0817; Ti 0,63428; Ta 0,01555; Nb 0,028593; Mo 0,098088; TiN 0,1938; Co 0,13573; Ni 0,1022; V 0,06353 und Petrolkoks 0,9226 bestand. Titannitrid wurde hier als Verbindung vorgegeben, weil aufgrund der höheren Affinität des Stickstoffes zu Titan im Vergleich zu Kohlenstoff die Gefahr (bei der Erschmelzung unter Stickstoff als Reaktionsgas) vorliegen würde, daß der Stickstoff die Kohle aus der Verbindung TiC verdrängen könnte. Die errechnete potentielle Energiedichte dieses Gemisches beträgt etwa 9,5 kJ/cm$^3$. Das Pulvergemisch wurde mit Hilfe eines organischen Binders nach Stand der Technik zu einer Folie von 1 mm Dicke verarbeitet, mit Hilfes eines Klebers auf Gummibasis auf ein Stahlsubstrat (St 52) geklebt, das Werkstück anschließend bei 370°C eine Stunde in Argon entgast. Dann wurde mit den eingangs genannten Daten diese Pulvervorbeschichtung mit dem $CO_2$-Laser umgeschmolzen mit Argon als Schutzgas. Die erreichte Flächenleistung betrug ca. 0,45 m$^2$/h. Die Schicht enthielt ca. 30 Vol.-%. Eisen. Deshalb wurde der Beschichtungsvorgang noch mehrmals wiederholt. Dabei ließen sich nach fünf Beschichtungen nur noch Eisenspuren im Schliff auffinden.

Interessanterweise wurden im Schliffbild keine Hartstoffdendriten gefunden, sondern Ti/C/N-Partikel von bis zu 5 μm ø. Durch geringe Dicken der Einzelschichten und geringe Vorwärmtemperaturen sollte sich diese Korngröße noch verringern lassen. Die Härte der obersten Schicht beträgt etwa 1400 HV.

Zur Herstellung von Formkörpern aus Cermets nach diesem Verfahren erscheint es als wesentlich eleganter, von einem Titansubstrat und einer dem Aufmischungsgrad der ersten Schicht angepaßten Zusammensetzung des Zusatzwerkstoffes in Kohlenstoff- und Bindephasenanteil auszugehen und die Flächenleistung weiter dadurch zu erhöhen, daß man die Wärme der vorausgegangenen Beschichtung als Substratvorwärmung nutzt.

Über Maßnahmen zur Lasertexturierung und Laserschmelzen von supraleitenden Schichten aus Y Ba$_2$Cu$_3$O$_{6.5+x}$ wird von Hofer, G.; Kleinlein, W.; Friedrich, B.C. in "Metall", 44. Jahrgang, Heft 12, S. 1142-1147, Dez. 1990 berichtet. Es ist nun erfindungsgemäß möglich, aus Yttrium-Metall und/oder Bariummetall zusammen mit einem Sauerstoff-Überschuß-Träger in Sauerstoffatmosphäre, z.B. Bariumperoxid und/oder CuO, solche Schichten oder Formkörper durch Mehrfachbeschichtung mit hoher Flächenleistung herzustellen.

**Patentansprüche**

1. Verfahren zum Herstellen von Schichten auf Substratoberflächen und zur Herstellung von Formteilen aus Vielfachschichten nach Art des Auftragsschweißens mit Hilfe der Energiezufuhr einer Energiequelle in oder auf das Substrat oder in den Schichtwerkstoff, der zum Teil oder vollständig aus Zusatzmaterial besteht, unter Anschmelzung der Substratoberfläche und/oder der Oberfläche der vorausgegangenen Schicht mit oder ohne Gegenwart und Reaktionsteilnahme eines reaktiven Gases, wobei mehr als 50 Vol.-% des späteren Schichtmaterials den schmelzflüssigen Zustand durchlaufen, erstarren und die Schicht mit $10^2$ bis $10^8$ k/s oberhalb von ca. 500 °C abkühlt, dadurch gekennzeichnet, daß festes Zusatzmaterial während und/oder nach der Einkopplung der Energie der Energiequelle mit sich selbst und/oder mit dem Substratmaterial unter Wärmefreisetzung von mehr als 2 $kJ/cm^3$ der Schicht unter Bildung einer Oxid-Keramik-enthaltenden und/oder einer hartstoffhaltigen und/oder eine oder mehrere intermetallische Verbindungen enthaltenden Schicht reagiert.

2. Verfahren nach Anspruch 2, dadurch gekennzeichnet, daß eine Energiequelle mit einer Leistungsdichte von $\geq 10^3$ $W/cm^2$ verwendet wird.

3. Verfahren nach Anspruch 2, dadurch gekennzeichnet, daß als Energiequelle ein energiereicher Stahl nach Art eines Lasers, ein Elektronenstrahl, ein elektrischer Lichtbogen oder eine Hochleistungslampe verwendet wird.

4. Verfahren nach den vorhergehenden Ansprüchen, dadurch gekennzeichnet, daß mehrere Schichten auf das Substratmaterial nacheinander aufgebracht werden.

5. Verfahren nach Anspruch 4 dadurch gekennzeichnet, daß das Zusatzmaterial diskontinuierlich zugeführt wird.

6. Verfahren nach den vohergehenden Ansprüchen dadurch gekennzeichnet, daß das Zusatzmaterial mindestens eine Komponente enthält, die einen tieferen Schmelzpunkt als das Substratmaterial aufweist.

7. Verfahren nach den vorhergehenden Ansprüchen, dadurch gekennzeichnet, daß Nitride und/oder Karbide und/oder Oxide und/oder Phosphide und/oder Silizide und/oder intermetallische Verbindungen während der Beschichtung exotherm gebildet werden, deren Bildungswärme als absoluter Betrag bei 25 °C um mehr als 40 kJ pro mol der mit ganzzahligen Stöchiometriefaktoren geschriebenen Verbindung größer ist, als der Betrag, den die zur Schichtbildung benötigten Anteile des Zusatzmaterials aufweisen.

8. Anwendung des Verfahrens nach den vorhergehenden Ansprüchen auf die Bildung von Schichten oder Formkörpern aus einer härtbaren stahlgebundenen Hartstofflegierung mit mindestens 40 Vol.-% TiC in einer Metallmatrix hergestellt werden.

9. Anwendung des Verfahrens nach einem der Ansprüche 1 bis 7 auf die Bildung von Cermet-Schichten oder Cermet-Formkörpern.

10. Anwendung des Verfahrens nach einem der Ansprüche 1 bis 7 auf die Bildung von Schichten oder Formkörpern aus schwer oder nicht kalt- oder warmumformbaren intermetallischen Verbindungen oder mit einem über 40 Vol.-% der Verbindungen in einer Metallmatrix.

11. Anwendung des Verfahrens nach Anspruch 10, auf die Bildung von Schichten oder Formkörpern aus AlNi und/oder aus $AlNi_3$, oder aus Material, welches diese Phasen zu mehr als 50 Vol% enthält, und/oder aus einem oder mehreren Oxiden mit bis 50 Vol-% aus der Reihe Aluminiumoxid, Oxid einer oder mehrerer der Seltenen Erden, Erdalkalimetalloxid, Zirkonoxid, Yttriumoxid.

12. Anwendung des Verfahrens nach einem der Ansprüche 1 bis 7 auf Formkörper oder Schichten aus Molybdändisilizid ($MoSi_2$).

13. Anwendung des Verfahrens nach einem der Ansprüche 1 bis 7 auf die Bildung abrasions- und/oder korrosionsbeständiger und/oder zunderbeständiger Schichten auf Substraten aus Titan oder Titanbasislegierungen oder auf denen der Reihe Ta, W, Mo, Zr, Hf, V, Nb.

14. Anwendungen des Verfahrens nach einem der Ansprüche 1 bis 7 auf die Bildung von Schichten auf Substraten aus Aluminium oder Aluminiumbasislegierungen.

15. Anwendungen des Verfahrens nach einem der Ansprüche 1 bis 7 auf die Bildung von Schichten oder Formkörpern mit einem Gehalt von 40 bis 100 Vol.-% eines oder mehrerer Karbide aus der Reihe W, V, Cr, Ti, Mn, Zr, Ta, Nb, Mo, Si, Ce, La, Y, Al, Hf, Fe, Co, Ni, Erdalkalimetalle, Cu und/oder eines oder mehrerer Nitride aus der Reihe, und/oder eines oder mehrerer Boride aus der Reihe, und/oder eines oder mehrerer Phosphide aus der Reihe und/oder eines oder mehrerer Silizide aus der Reihe und/oder eines oder mehrerer Oxide aus der Reihe.

16. Anwendungen des Verfahrens nach den vorhergehenden Ansprüchen auf die Bildung von Schichten auf Stahlsubstraten aus Werkzeugstählen, deren $M_S$-Temperaturen bei 300°C oder darüber liegt.

17. Anwendungen des Verfahrens nach einem der Ansprüche 1 bis 15 auf die Bildung von Schichten auf nickelmartensithärbaren Stahlsubstraten.

18. Anwendung des Verfahrens nach den vorhergehenden Ansprüchen auf die Bildung einer Schicht, die eine hohe Verschleißfestigkeit und geringe Neigung zur Kaltverschweißung z.B. beim Kaltumformen von Edelstählen aufweist, auf Substraten auf Kupferbasis oder Stahlbasis mit Hilfe eines Zusatzmaterials in Form eines Pulvergemisches aus Titan und Kohlenstoff und/oder einer titanreichen Kupferverbindung, z.B. $Ti_2Cu$, zusammen mit Kohlenstoff, z.B. als gemahlener Petrolkoks.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | WO-A-8 910 434 (GLYCO-METALL-WERKE GMBH)<br>* Seite 5, Zeile 10 - Zeile 19 *<br>* Seite 8, Zeile 8 - Seite 10, Zeile 11 *<br>* Seite 11, Zeile 7 - Zeile 27 *<br>--- | 1-3,5,6<br>8,11,12 | C23C26/02<br>C23C24/10 |
| A | FR-A-2 385 810 (AVCO EVERETT LABORATORY INC.)<br>* Seite 10, Zeile 7 - Zeile 32; Ansprüche 1,4-7 *<br>--- | 1-3,6,7<br>13,14 | |
| A | FR-A-2 341 655 (UNITED TECHNOLOGIES CORP.)<br>* Seite 3, Zeile 1 - Zeile 22 *<br>* Seite 5, Zeile 31 - Seite 8, Zeile 14 *<br>--- | 1-3,6,7 | |
| A | LE VIDE, LES COUCHES MINCES<br>Bd. 43, Nr. 243, August 1988, PARIS, FR<br>Seiten 545 - 563;<br>G. COQUERELLE: 'TRAITEMENT DE SURFACE PAR LASER'<br>* das ganze Dokument *<br>--- | 1-6 | |
| A | METAL SCIENCE & HEAT TREATMENT<br>Bd. 29, Nr. 7-8, Juli 1987, NEW-YORK, USA<br>Seiten 547 - 549;<br>M.V. RACHENKO ET AL: 'STRUCTURE AND PROPERTIES OF INDUCTION AND ELECTRON-BEAM SURFACINGS OF POWDER MATERIALS'<br>--- | 1,3 | RECHERCHIERTE SACHGEBIETE (Int. Cl.5 )<br><br>C23C |
| A | FR-A-2 551 770 (HONDA GIKEN KOGYO K.K.)<br>* Zusammenfassung *<br><br>----- | 1,3 | |

Der vorliegende Recherchenbericht wurde für alle Patentansprüche erstellt

| Recherchenort | Abschlußdatum der Recherche | Prüfer |
|---|---|---|
| DEN HAAG | 22 MAI 1992 | JOFFREAU P. |

EPO FORM 1503 03.82 (P0403)